# EUROPEAN PATENT SPECIFICATION

(11) **EP 2 431 202 B1**
(45) Date of publication and mention of the grant of the patent: **12.06.2013**
(21) Application number: 11181327.5
(22) Date of filing: 15.09.2011
(51) Int. Cl.: B60G 17/052, B60G 21/073, B60G 17/056

(54) **Pressure control device**
Druckregeleinrichtung
Dispositif de contrôle de pression

(30) Priority: 21.09.2010 SE 1050981
(43) Date of publication of application: 21.03.2012
(73) Proprietor: Scania CV AB, 151 87 Södertälje (SE)
(72) Inventor: Aslan, Daniel, 145 69 Norsborg (SE)

(56) References cited:
- DE-A1- 19 515 255
- DE-A1- 19 530 260
- DE-C1- 19 845 925
- GB-A- 1 551 769

## Description

### Technical field

The present invention relates to a device for regulating the pressure in a pair of air bellows according to the preamble of claim 1, and a transport vehicle comprising such a device according to claim 6.

### Background to the invention

Most buses today are provided with a vehicle suspension system comprising air bellows, the pressure of which can be regulated by means of a so called kneeling system so that the bus can sink towards the ground to make it easier for, inter alia, persons with mobility difficulties, e.g. wheelchair users, perambulators and the like to board and alight at bus stops. The suspension system of a bus, and in many cases also of a truck, comprises inter alia a number of pneumatic means, usually pneumatic bellows, distributed at each of the vehicle's axles to provide good springing of the vehicle and a high level of comfort. A kneeling system comprises air connections and valve blocks which control the pressure in these bellows so that the bus can be lowered towards the ground for passengers to board/alight and can be raised when the bus is to move off. When the bus comes to a halt to pick up and set down passengers, the pressure in said bellows is reduced so that the bus kneels, i.e. drops towards the ground to reduce the step height between ground and bus. When the bus has thereafter to move off again, the pressure in the bellows is increased so that the bus rises back to a suitable running height. Examples of such systems are described in DE19515255 and GB1551769. The endeavour of bus companies to maintain timetables involves continually trying to save time along the various routes. Today's kneeling systems mostly work well but are regarded as slow and of relatively complicated structure. There is therefore a desire to provide buses with a quick kneeling system which is also simplified and more cost-effective.

### Object of the invention

The object of the present invention is therefore to propose a device for regulating the air pressure in the bellows of a suspension system of a vehicle which is quicker and simpler and more cost-effective than today's devices.

### Summary of the invention

The above and other objects indicated by the description set out below are achieved by the present invention as defined in the independent claims 1 and 6. Suitable embodiments of the invention are indicated in the dependent claims 2-5 and 7.

The present invention thus defines a device for regulating the air pressure in at least one pair of bellows situated between a respective axle and the frame of a vehicle, which device comprises at least one air connection and at least one valve block comprising at least two valves, which air connection or connections are arranged to supply compressed air to said pair of bellows via said at least one valve block, such that said at least two valves in said at least one valve block are arranged to regulate the pressure level in said at least one pair of bellows, which device is characterised in that it comprises at least one valve which is situated between said pair of bellows and which at in one position are adapted to emptying at least one of the pair of bellows.

The invention affords the advantage that the device has a further valve which empties the air from a bellows, which emptying of the bellows and consequent kneeling of the vehicle take place more quickly when passengers are to board/alight, e.g. at a bus stop. The invention also affords the advantage that the vehicle more quickly resumes a correct running height for moving off after it has kneeled, e.g. at a bus stop. A further advantage of the invention is that the number of components becomes smaller than in the case of similar devices according to prior art. Fewer components means a less expensive device.

According to an advantageous embodiment, said at least one valve situated between said pair of bellows may in one position be arranged to connect them together. Pressure equalisation between a pair of bellows is thus possible with fewer components than in prior art, making the device according to the present invention simple and inexpensive.

The valve between a pair of bellows is a 3/2 valve capable of assuming a position whereby the bellows are emptied and a position whereby they are connected together. The valve block situated between the air connection and the bellows comprises two 2/2 valves and one 3/2 valve. This type of valve block is standard and is therefore readily available on the market and less expensive than more complicated and less usual valve blocks.

### Brief description of the drawings

The invention is described below in more detail on the basis of non-limitative embodiment examples with reference to the attached drawings in which
Figure 1 is a schematic view of the fixing device according to prior art, and
Figure 2 is a schematic view of an embodiment of a device according to the present invention.

### Detailed description of the invention

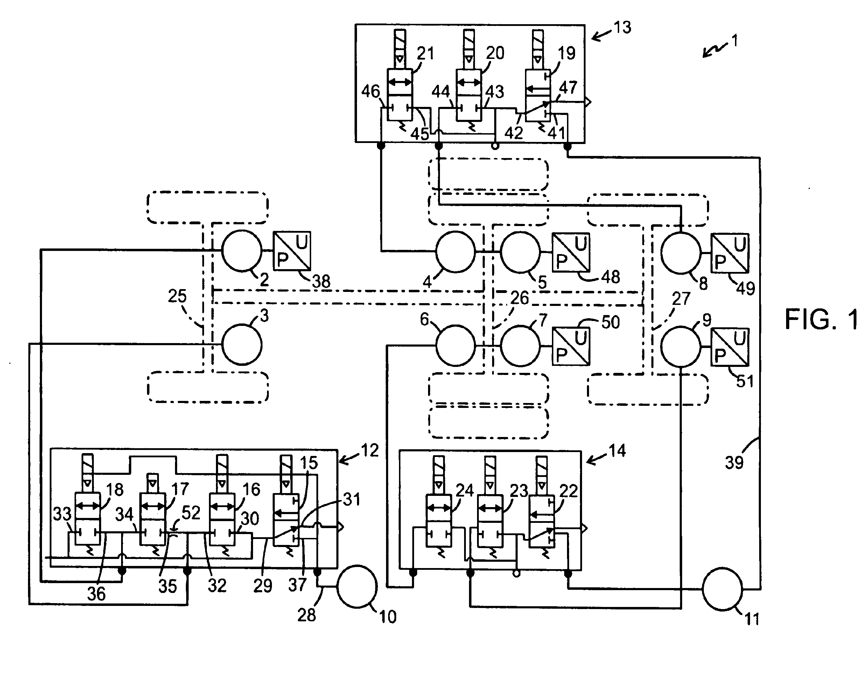

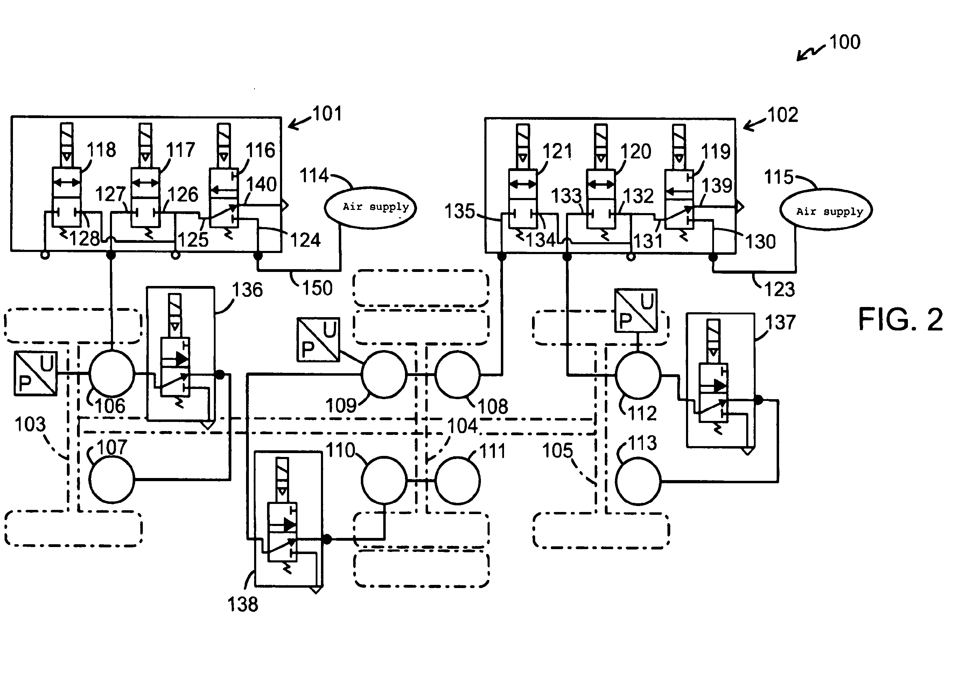

Figure 1 depicts a prior art device for regulating the air pressure in the bellows of a bus. Figure 2 depicts an embodiment of the present invention applied to a device for regulating the air pressure in the bellows of a vehicle. It should however be noted immediately that the invention is in no way restricted to this type of device but is applicable to all kinds of devices for regulating the air pressure in the bellows of a vehicle. The description refers to the vehicle as a bus but it may of course be for example a truck or a car or the like. The description also indicates that the number of axles of the vehicle is three, but the number of axles may of course be both smaller and greater.

Figure 1 is a schematic view of an embodiment of a known device 1 for regulating the pressure in a number of air bellows 2, 3, 4, 5, 6, 7, 8, 9 of a bus. The device in Fig. 1 comprises two air connections 10, 11, each of which usually comprises a compressor (not depicted) taking new air in from the surroundings, a drying device (not depicted) drying the incoming air, and an air tank (not depicted) from which the bellows 2, 3, 4, 5, 6, 7, 8, 9 are replenished when the pressure in them is to be raised. The device in Fig. 1 further comprises three valve blocks, viz. a first valve block 12, a second valve block 13 and a third valve block 14, each comprising a number of valves. Said first valve block 12 comprises four valves 15, 16, 17, 18, said second valve block 13 three valves 19, 20, 21 and said third valve block 14 three valves 22, 23, 24. Said first valve block 12 is connected to a separate first air connection 10 supplying air to the bellows 2, 3 which are situated on the front axle 25 of the bus. When the pressure in either or both of the bellows 2, 3 is to be raised, air is supplied from said first air connection 10 to said first valve block 12, via which it is then distributed to said bellows 2, 3. As previously mentioned, said first valve block 12 is composed of four valves 15, 16, 17, 18 comprising one so-called 3/2 valve 15 and three 2/2 valves 16, 17, 18. A 3/2 valve has three ports and can assume two positions. Said three ports of a 3/2 valve are so distributed that a first port 29 is situated on a secondary side and two ports, viz. a second port 31 and a third port 37, are situated on an opposite primary side, and one of the two ports on the primary side, viz. the second port 31, is a discharge port. A 2/2 valve has two ports and can likewise assume two positions. Said ports of a 2/2 valve are so distributed that a first port is situated on a primary side and a second port is situated on a secondary side.

In Fig. 1, said air connection 10 supplies the bellows 2, 3 at the front axle 25 with air via said first valve block 12. A line 28 extends from said air connection 10 to said first valve block 12 and is there connected to said third port 37 of the 3/2 valve 15. Said 3/2 valve 15 is connected via its first port 29 to the primary sides of a first 2/2 valve 16 and a third 2/2 valve 18, which valves 16, 18 are each connected to their respective bellows 2, 3 from their secondary side 32, 36. The first 2/2 valve 16 is connected to the left bellows 3 on the front axle 25, as seen in the vehicle's direction of forward movement, and the third 2/2 valve 18 is connected to the right bellows 2 of the front axle 25. In the first valve block 12 there is also a second 2/2 valve 17 which has its secondary side 35 connected both to the secondary side 32 of said first 2/2 valve 16 and to said left bellows 3 on the front axle 25, and its primary side 34 connected both to the secondary side 36 of the third 2/2 valve 18 and to the right bellows 2 on the front axle 25. Said second 2/2 valve 17 of the first valve block 12 is intended to equalise the pressure between the right and left sides and is activated to connect together the right and left bellows 2, 3 of the front axle 25 so that the pressure in them can be equalised. On the secondary side 35 of said second 2/2 valve 17 a throttle 52 or a constriction is provided to prevent pressure oscillations between the right and left sides from becoming too great.

When the bus arrives at a stop and the driver wishes for various reasons to lower the forward portion of the bus on the right side to make it easier for passengers to board/alight, he/she controls the device so that the primary side 33 and the secondary side 36 of said third 2/2 valve 18 are connected together, and the first port 29 and the second port 31 of said 3/2 valve 15 are connected together, with the result that the 3/2 valve 15 is open for discharge of air. The air in the right bellows 2 can then flow from the bellows 2, through the third 2/2 valve 18, through the 3/2 valve 15 and out into the surroundings. The right bellows 2 is emptied of air and the right side of the bus sinks towards the ground that the bus kneels on its forward right side. When the passengers have boarded/alighted, the driver controls the device so that the first port 29 of the 3/2 valve 15 is connected to the third port 37, and the third 2/2 valve 18 is open, thereby connecting together the latter's primary side 33 and secondary side 36. Air from the air connection 10 can then flow in and fill the right bellows 2 on the front axle 25, causing the forward right side of the bus to rise back from ground level. To equalise the pressure between the two bellows 2, 3, the second 2/2 valve 17 is then opened so that the pressure between the right bellows 2 and the left bellows 3 can be equalised, causing the subframe and floor of the bus to become level. To monitor that the desired pressure is reached in the bellows 2, 3, a pressure sensor 38 is provided at the right bellows 2. The bus can then move on towards the next stop.

In Fig. 1, the second air connection 11 supplies the bellows 4, 5, 6, 7 of the middle axle 26 and the bellows 8, 9 of the rear axle 27 with air via a second valve block 13 and a third valve block 14. The second valve block 13 comprises a 3/2 valve 19 and two 2/2 valves 20, 21, and the third valve block 14 a 3/2 valve 22 and two 2/2 valves 23, 24. A line 39 extends from said second air connection 11 to said second valve block 13 and is there connected to the third port 41 of the 3/2 valve 19. Said 3/2 valve 19 has its first port 42 connected to the respective primary sides 43 and 45 of the first 2/2 valve 20 and the second 2/2 valve 21, which valves are each connected to their respective bellows 4 and 8 from their respective secondary sides 44 and 46. The first 2/2 valve 20 is connected to the right bellows 4 on the middle axle 26, as seen in the vehicle's direction of forward movement, and the second 2/2 valve 21 is connected to the right bellows 8 of the rear axle 27. In Fig. 1 there are four bellows on the middle axle, comprising two on the right side and two on the left, but they may of course also be one on the right and one on the left.

As in the case of the front axle 25, the driver can control the pressure of the bellows 4, 5, 6, 7, 8, 9 on both the middle axle 26 and the rear axle 27 so that the whole right longitudinal side of the bus kneels. This makes boarding and alighting easier via the front, middle and rear doors. When the bus arrives at a stop and the driver wishes to lower its whole right side to make it easier for passengers to board/alight via the forward door, the middle door and the rear door, he/she controls the device 1 as described above in order to empty the bellows 2 on the right side of the front axle 25. Lowering the middle and rear portions of the bus entails having to empty the bellows 4, 5 and 8 of air. This is achieved on the middle axle by the primary side 43 and the secondary side 44 of said first 2/2 valve 20 and the primary side 45 and the secondary side 46 of said second 2/2 valve 21 of the second valve block 13 being connected together, with the result that the first port 42 and the second port 47 of said 3/2 valve 19 are connected together. Said 3/2 valve 19 of said second valve block 13 will then be open and the air in the bellows 4, 5, 8 on the right side of the middle axle 26 and the rear axle 27 can flow out through the first 2/2 valve 20 and the second 2/2 valve 21, through the 3/2 valve 19 and out into the surroundings. All of the bellows 2, 4, 5, 8 on the right side of the bus are emptied of air and the right side of the bus sinks towards the ground, i.e. the bus kneels on its right side. When the passengers have boarded/alighted, the driver controls the device 1 so that the bellows 2 on the right side of the front axle 25 fills with air as above. The device is also controlled such that the first port 42 of the 3/2 valve 19 of the second valve block is connected to the third port 41, and the first 2/2 valve 20 and the second 2/2 valve 21 are open, i.e. so that the respective primary sides 43 and 45 and secondary sides 44 and 46 of the valves 20, 21 are connected together. Air from the air connection 11 can then flow in and fill the right bellows 2, 4, 5, 8 on the middle axle 26 and rear axle 27 of the bus, causing the right side of the bus to rise back from ground level. To be able to equalise the pressure between the left and right bellows of a pair, the bellows 4, 5 on the middle axle and the bellows 8 on the rear axle 27 are provided with respective pressure sensors 48, 49. Pressure sensors 48, 49, 50, 51 on the left and right sides of the middle axle and rear axle monitor the pressure in the respective bellows and the system can use these values as a basis for controlling the device so that the pressure is equalised between the right and left sides of the bus.

Fig. 2 depicts an embodiment of a device 100 according to the present invention comprising two valve blocks 101, 102, viz. a first valve block 101 connected to the bellows 106, 107 of the front axle 103, and a second valve block 102 connected to the bellows 108, 109, 110, 111 of the middle axle 104 and the bellows 112, 113 of the rear axle 105, such that the valve block 101 comprises three valves 116, 117, 118 and the valve block 102 comprises three valves 119, 120, 121. The valve blocks 101, 102 used in the embodiment in Fig. 2 take the form of standard valve blocks which are readily obtainable and therefore inexpensive to purchase. It would of course be possible to have more or fewer valves in the valve blocks, e.g. only two of the three valves in the first valve block, but the valve block with three valves is more cost-effective and has therefore been chosen. The invention is thus not restricted to only the indicated numbers of valves in a valve block. The valve blocks 101, 102 are respectively connected to a first air connection 114 and a second air connection 115, as described in Fig. 1. As in the prior art device 1 (see Fig. 1) described above, a valve block may comprise three valves, two of them being 2/2 valves and one a 3/2 valve.

In Fig. 2, a line 150 extends from said air connection 114 to said first valve block 101 and is then connected to said third port 124 of the 3/2 valve 116. Said 3/2 valve 116 has its first port 125 connected to the primary side 126 of the first 2/2 valve 117 and to the primary side 128 of the second 2/2 valve 118. This embodiment uses only the first 2/2 valve and it is therefore only this 2/2 valve which is connected to a bellows 106 on the right side of the front axle 103. In Fig. 2, the bellows 106 on the right side of the front axle 103 is connected to a bellows 107 situated on the left side of the front axle 103 via a 3/2 valve 136. From said second air connection 115 a line 123 extends to said second valve block 102. The line 123 connects to the second valve block 102 via the third port 130 of the 3/2 valve 119. Said 3/2 valve 119 of the second valve block 102 has its first port 131 connected not only to the first primary side 132 of the first 2/2 valve 120 but also to the primary side 134 of the second 2/2 valve 121. The secondary side 133 of the first 2/2 valve 120 in the second valve block 102 is connected to a bellows 112 on the right side (as seen in the forward direction of movement of the bus) of the rear axle 105. The bellows 112 on the right side of the rear axle 105 is connected in the present invention to a bellows 113 on the left side of the rear axle via a 3/2 valve 137. Similarly, the secondary side 135 of the second 2/2 valve 121 of the second valve block 102 is connected to a bellows 108 on the right side of the middle axle 104. This diagram shows two bellows situated on the right side of the middle axle 104 but it is of course possible to have only one bellows. The bellows 108 on the right side of the middle axle 104 is connected via two bellows 109, 110 to a bellows 111 on the left side of the middle axle 104 via a 3/2 valve 138. Two bellows are likewise situated on this side, but as on the right side of the middle axle 104 it is also possible to have only one bellows on this side.

As in the prior art device 1, a driver can control the pressure in the bellows 106, 107 on the front axle 103, the pressure of the bellows 108, 109, 110, 111 on the middle axle 104 and the pressure of the bellows 112, 113 on the rear axle 105. He/she can thus cause the whole right longitudinal side of the bus to kneel. The bus kneeling makes it easier for passengers to board and alight via the front, middle and rear doors. When the bus arrives at a stop and driver wishes to lower the whole of its right side to make it easier for passengers to board/alight via the forward door, the middle door and the rear door, he/she controls the device 100 in Fig. 2 so that the first port 125 of the 3/2 valve 116 in the first valve block 101 is connected to the second port 140 of the same 3/2 valve 116, and the primary side 126 and secondary side 127 of the first 2/2 valve 117 are connected together. The air in the bellows 106 on the right side of the front axle 103 is then emptied of air as in the prior art device 1, so the forward portion of the bus kneels. Unlike the prior art device 1, the bellows 106 on the right side of the front axle 103 is also emptied of air via the 3/2 valve 136 situated between the bellows 106 and 107 on the right and left sides of the front axle 103. The discharge is therefore significantly quicker than with the device according to Fig. 1. To enable also the middle portion and the rear portion of the bus to kneel, the first port 131 is connected to the second port 139 of the 3/2 valve 119 in the second valve block 102, and the respective primary sides 132 and 134 are connected to the respective secondary sides 133 and 135 of the respective first and second 2/2 valves 120 and 121.The bellows 108, 109 on the middle axle 104 and the bellows 112 on the rear axle 105 are then emptied of air. As in the case of the right bellows 106 on the front axle 103, the bellows 108, 109 on the middle axle 104 and the bellows 112 on the rear axle 105 are emptied by their respective 3/2 valves 138, 137 situated between the right and left bellows on the respective middle axle 104 and rear axle 105. The bellows on the right side of the middle axle 104 and rear axle 105 are also emptied in this case more quickly than in the prior art device 1.

When the passengers have boarded/alighted, the bus driver controls the device 100 so that the bellows 106, 108, 109, 112 on the right side of the respective front axle 103, middle axle 104 and rear axle 105 are refilled with air. This is done by the respective 3/2 valves 116 and 119 of the first valve block 101 and the second valve block 102 being reset so that the respective first ports 125 and 131 are connected to the respective third ports 124 and 130. The primary side 126 is also connected to the secondary side 127 of the first 2/2 valve 117 of the first valve block 101, and to the primary side 132, 134 and the secondary side 133, 135 of the respective first and second 2/2 valves 120, 121 of the second valve block. In addition, the 3/2 valves 136, 137, 138 are reset so that the valves on the right side of the bus are connected to their respective counterparts on the left side. The air in the air connections 114, 115 can then be used to fill all the bellows 106, 108, 110, 112 on the right side of the bus. The 3/2 valves 136, 137, 138 can be used for pressure equalisation between the right and left sides without further valve blocks such as in the prior art device 1. The bus can then move on towards the next stop.

## Claims

1. A device (100) for regulating the suspension system of a vehicle, which device (100) comprises at least three pairs of bellows (106, 107; 109, 110, 108, 111; 112, 113) each situated between an axle (103, 104, 105) and the frame of a vehicle, two air connections (114, 115) and first and second valve blocks (101, 102) each comprising at least two valves (116, 117, 118; 119, 120, 121), which air connections (114, 115) are arranged to supply compressed air via said respective valve blocks (101, 102) to said pairs of bellows (106, 107; 109, 110, 108, 111; 112, 113), which at least two valves (116, 117, 118; 119, 120, 121) in said valve blocks (101, 102) are arranged to regulate the pressure level in said pairs of bellows (106, 107; 109, 110, 108, 111; 112, 113), **characterised in that** the device comprises a further valve (136, 137, 138) situated between a pair of bellows (106, 107; 109, 110, 108, 111; 112, 113), which further valve (136, 137, 138) in one position is arranged to empty one of a pair of bellows (106, 107; 109, 110, 108, 111; 112, 113), wherein said further valve (136, 137, 138) situated between a pair of bellows (106, 107; 109, 110, 108, 111; 112, 113) is a 3/2 valve.

2. A device according to claim 1, **characterised in that** in one position said further valve (136, 137, 138) situated between a pair of bellows (106, 107; 109, 110, 108, 111; 112, 113) is arranged to connect the pair of bellows together (106, 107; 109, 110, 108, 111; 112, 113).

3. A device according to any one of the foregoing claims, **characterised in that** the first valve block (101) is connected to the bellows (106, 107) at the vehicle's front axle (103), and the second valve block (102) is connected to the bellows (108, 109, 110, 111) at the middle axle (104) and to the bellows (112, 113) at the rear axle (105).

4. A device according to any one of the foregoing claims, **characterised in that** said valve block (101, 102) situated between the air connection (114, 115) and the bellows comprises two 2/2 valves and one 3/2 valve.

5. A device according to any one of the foregoing claims, **characterised in that** the air connection (114, 115) comprises an air tank and a compressor.

6. A transport vehicle, **characterised in that** it comprises a device according to any one of the foregoing claims.

7. A transport vehicle according to claim 6, **characterised in that** it is a bus.

## Patentansprüche

1. Vorrichtung (100) zum Regulieren des Federungssystems eines Fahrzeugs, wobei die Vorrichtung (100) wenigstens drei Balgpaare (106, 107; 109, 110; 108, 111; 112, 113) umfasst, die jeweils zwischen einer Achse (103, 104, 105) und dem Rahmen eines Fahrzeugs angeordnet sind, zwei Luftanschlüsse (114, 115) und einen ersten und einen zweiten Ventilblock (101, 102), die jeweils wenigstens zwei Ventile (116, 117, 118; 119, 120, 121) umfassen, wobei die Luftanschlüsse (114, 115) dazu eingerichtet sind, den Balgpaaren (106, 107; 109, 110, 108, 111; 112, 113) verdichtete Luft mittels der entsprechenden Ventilblöcke (101, 102) bereitzustellen, wobei die zumindest zwei Ventile (116, 117, 118; 119, 120, 121) in den Ventilblöcken (101, 102) dazu eingerichtet sind, das Druckniveau in den Balgpaaren (106, 107; 109, 110, 108, 111; 112, 113) zu regulieren,
**dadurch gekennzeichnet, dass** die Vorrichtung ein weiteres Ventil (136, 137, 138) umfasst, das zwischen einem Balgpaar (106, 107; 109, 110, 108, 111; 112, 113) angeordnet ist, wobei das weitere Ventil (136, 137, 138) in einer Stellung dazu eingerichtet ist, einen aus einem Balgpaar (106, 107; 109, 110, 108, 111; 112, 113) zu leeren, wobei das weitere Ventil (136, 137, 138), das zwischen einem Balgpaar (106, 107; 109, 110, 108, 111; 112, 113) angeordnet ist, ein 3/2 Ventil ist.

2. Vorrichtung nach Anspruch 1,
**dadurch gekennzeichnet, dass** das weitere Ventil (136, 137, 138), das zwischen einem Balgpaar (106, 107; 109, 110, 108, 111; 112, 113) angeordnet ist, in einer Stellung dazu eingerichtet ist, das Balgpaar miteinander zu verbinden (106, 107; 109, 110, 108, 111; 112, 113).

3. Vorrichtung nach einem der vorangehenden Ansprüche,
**dadurch gekennzeichnet, dass** der erste Ventilblock (101) mit den Bälgen (106, 107) an der Vorderachse (103) des Fahrzeugs verbunden ist und der zweite Ventilblock (102) mit den Bälgen (108, 109, 110, 111) an der Mittelachse (104) und mit den Bälgen (112, 113) an der Hinterachse (105) verbunden ist.

4. Vorrichtung nach einem der vorangehenden Ansprüchen,
**dadurch gekennzeichnet, dass** der Ventilblock (101, 102), der zwischen dem Luftanschluss (114, 115) und den Bälgen angeordnet ist, zwei 2/2 Ventile und ein 3/2 Ventil umfasst.

5. Vorrichtung nach einem der vorangehenden Ansprüche,
**dadurch gekennzeichnet, dass** der Luftanschluss (114, 115) einen Lufttank und einen Kompressor umfasst.

6. Transportfahrzeug,
**dadurch gekennzeichnet, dass** es eine Vorrichtung gemäß einem der vorangehenden Ansprüche umfasst.

7. Transportfahrzeug nach Anspruch 6,
**dadurch gekennzeichnet, dass** es ein Bus ist.

## Revendications

1. Dispositif (100) destiné à réguler le système de suspension d'un véhicule, lequel dispositif (100) comprend au moins trois paires de soufflets (106, 107; 109, 110, 108, 111; 112, 113), chacun situé entre un essieu (103, 104, 105) et le châssis d'un véhicule, deux raccords pneumatiques (114, 115) et des premier et second blocs de distribution (101, 102), comprenant chacun au moins deux soupapes (116, 117, 118; 119, 120, 121), lesquels raccords pneumatiques (114, 115) sont agencés pour fournir de l'air comprimé via lesdits blocs de distribution (101, 102) respectifs auxdites paires de soufflets (106, 107; 109, 110, 108, 111; 112, 113), les au moins deux soupapes (116, 117, 118; 119, 120, 121) dans lesdits blocs de distribution (101, 102) étant agencées pour réguler le niveau de pression dans lesdites paires de soufflets (106, 107; 109, 110, 108, 111; 112, 113), **caractérisé en ce que** le dispositif comprend une autre soupape (136, 137, 138) située entre une paire de soufflets (106, 107; 109, 110, 108, 111; 112, 113), laquelle autre soupape (136, 137, 138), dans une position, est agencée pour vider l'un d'une paire de soufflets (106, 107; 109, 110, 108, 111; 112, 113), ladite autre soupape (136, 137, 138) située entre une paire de soufflets (106, 107; 109, 110, 108, 111; 112, 113) étant une soupape à 3/2 voies.

2. Dispositif selon la revendication 1, **caractérisé en ce que**, dans une position, ladite autre soupape (136, 137, 138) située entre une paire de soufflets (106, 107; 109, 110, 108, 111; 112, 113) est agencée pour raccorder la paire de soufflets (106, 107; 109, 110, 108, 111; 112, 113) l'un à l'autre.

3. Dispositif selon l'une quelconque des revendications précédentes, **caractérisé en ce que** le premier bloc de distribution (101) est raccordé aux soufflets (106, 107) au niveau de l'essieu avant (103) du véhicule, et le second bloc de distribution (102) est raccordé aux soufflets (108, 109, 110, 111) au niveau de l'essieu médian (104) et aux soufflets (112, 113) au niveau de l'essieu arrière (105).

4. Dispositif selon l'une quelconque des revendications précédentes, **caractérisé en ce que** ledit bloc de distribution (101, 102) situé entre le raccord pneumatique (114, 115) et le soufflet comprend deux soupapes à 2/2 voies et une soupape à 3/2 voies.

5. Dispositif selon l'une quelconque des revendications précédentes, **caractérisé en ce que** le raccord pneumatique (114, 115) comprend un réservoir d'air et un compresseur.

6. Véhicule de transport, **caractérisé en ce qu'**il comprend un dispositif selon l'une quelconque des revendications précédentes.

7. Véhicule de transport selon la revendication 6, **caractérisé en ce que** ledit véhicule de transport est un bus.
